# EUROPÄISCHE PATENTSCHRIFT

(11) **EP 2 489 894 B1**
(45) Veröffentlichungstag und Bekanntmachung des Hinweises auf die Patenterteilung: **26.08.2015**
(21) Anmeldenummer: 12000966.7
(22) Anmeldetag: 15.02.2012
(51) Int. Cl.: F16D 3/223

(54) **Kugelgleichauffestgelenk mit elliptischen Kugelbahnverläufen**
Synchronise fixed ball joint with elliptical track
Joint homocinétique de type fixe à billes doté d'un déroulement de roulement à billes elliptique

(30) Priorität: 18.02.2011 DE 102011004427; 23.05.2011 DE 102011076293
(43) Veröffentlichungstag der Anmeldung: 22.08.2012
(73) Patentinhaber: Neapco Europe GmbH, 52351 Düren (DE)
(72) Erfinder: Weissenfels, Mirko, 51371 Leverkusen (DE); Bilz, Peter, 63579 Freigericht (DE)
(74) Vertreter: Lohmanns, Bernard

(56) Entgegenhaltungen:
- WO-A1-00/31427
- CH-A- 346 073
- DE-C1- 3 700 868
- FR-A1- 2 799 519

## Beschreibung

Die Erfindung betrifft allgemein ein Kugelgleichlauffestgelenk. Diese Gelenke werden beispielsweise für Antriebswellen oder Lenkwellen verwendet. Gelenke dieser Gattung weisen eine Kugelnabe, mehrere Kugeln, einen die Kugeln in sogenannten zugehörigen Käfigfenstern haltenden Käfig und ein Außenteil auf. Kugelnabe und das Außenteil weisen korrespondierende Kugelbahnen oder Kugelrinnen auf. Die Kugeln bewegen sich in radialer und tangentialer Richtung im Käfigfenster und in den Kugelbahnen. Kugelnabe, Kugelkäfig und Außenteil werden in der Regel durch sphärische, in wechselseitigem Eingriff stehende Flächen geführt. Bei den bekannten Gelenken bilden die Rinnen sphärische Flächen aus, auf denen die Kugeln Abrollbewegungen, die durch kreisförmige Bahnen beschrieben werden können, ausführen. Die als Rinnen im betreffenden Teil ausgebildeten Kugelbahnen befinden sich sowohl in der Kugelnabe als auch im Außenteil und ermöglichen einen teilkreisbahnförmigen Bewegungsablauf, auf der sich die Kugel beim Abwinkeln des Gelenks, d.h. bei nicht fluchtender Ausrichtung von Drehachse des Außenteils und der Kugelnabe, bewegen kann, um dem Gelenk die Abwinklung zu ermöglichen. Bei den bekannten Gelenken behält somit die Kugel ihren Abstand zum Gelenkmittelpunkt bei, dies ist insoweit nachteilig, da somit beim Abwinkeln des Gelenks die Drehmomentübertragung gegenüber dem gestreckten Gelenk beeinträchtigt ist und er Verschleiß erhöht ist.

Die WO 00/31427 A1 offenbart ein Kugelgleichlauffestgelenk mit einem hohlen Außenteil in dessenInnenfläche Bahnen angeordnet sind, die sich in Axialrichtung des Außenteils erstrecken, und eine in dem Außenteil angeordnete Kugelnabe, in deren Außenfläche zu den Bahnen des Außenteils bezüglich deren Anordnung korrespondierende Bahnen angeordnet sind, die sich in Axialrichtung der Kugelnabe erstrecken, mehreren Kugeln, welche jeweils in einer Bahn des Außenteils und einer Bahn der Kugelnabe zur Drehmomentübertragung aufgenommen sind, einem in dem Raum zwischen dem Außenteil und der Kugelnabe angeordneten Käfig mit Kugelfenstern, um die Kugeln zu halten, wobei die Bahnen jeweils so ausgestaltet sind, dass sich ein elliptischer Bewegungsverlauf des Mittelpunktes einer jeweils auf der Bahn in Axialrichtung abrollenden Kugel ergibt, der durch eine elliptische Mittelpunktsgleichung definiert ist.

Vor diesem Hintergrund dieser Nachteile hat sich die vorliegende Erfindung die Aufgabe gestellt, ein einfach herzustellendes Kugelgleichlauffestgelenk bereitzustellen, bei dem gegenüber dem Stand der Technik die Drehmomentübertragung und/oder die Verschleißfestigkeit insbesondere im angewinkelten Zustand, d.h. in dem Zustand, bei dem die beiden Rotationsachsen des Außenkörpers und der Kugelnabe zueinander gewinkelt stehen, verbessert sind. Diese Aufgabe wird erfindungsgemäß durch ein Modul mit den Merkmalen nach Anspruch 1 gelöst. Weitere, besonders vorteilhafte Ausgestaltungen der Erfindung offenbaren die Unteransprüche. Es ist darauf hinzuweisen, dass die in den Patentansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Das erfindungsgemäße Kugelgleichlauffestgelenk umfasst ein hohles Außenteil, in dessen Innenfläche Bahnen (Innenbahnen) angeordnet sind, die sich in Axialrichtung des Außenteils erstrecken, und eine in dem Außenteil angeordnete Kugelnabe, in deren Außenfläche zu den Bahnen des Außenteils bezüglich deren Anordnung korrespondierende Bahnen (Außenbahnen) angeordnet sind, die sich in Axialrichtung der Kugelnabe erstrecken, mehreren Kugeln, welche jeweils in einer Bahn des Außenteils und einer Bahn der Kugelnabe zur Drehmomentübertragung aufgenommen sind, einem in dem Raum zwischen dem Außenteil und der Kugelnabe angeordneten Käfig mit Kugelfenstern, um die Kugeln, beispielsweise in einer gemeinsamen Kugelebene, zu halten, wobei die Bahnen, d.h. die des Außenteils und die der Kugelnabe jeweils so ausgestaltetsind, dass sich ein elliptischer Bewegungsverlauf des Mittelpunkts einer jeweils : auf der Bahn abrollenden Kugel ergibt, der durch eine elliptische Mittelpunktsgleichung definiert ist. Durch die elliptische Formgebung behält die jeweilige Kugel beim Abwinkeln des Gelenks den Abstand zum Gelenkmittelpunkt nicht bei, sondern durch die Variation dieses Abstands und damit die Lageänderung der Kugel bezüglich des Gelenkmittelpunkts beim Abwinkeln des Gelenks, kann das Gelenk hinsichtlich maximaler Drehmomentübertragung durch das Gelenk und hinsichtlich Verschleiß optimiert werden. Ferner kann das Anschmiegen der Kugel an die Bahnen verbessert werden.

Erfindungsgemäß muss nicht zwingend die Oberfläche der jeweiligen Bahn in Axialrichtung durch eine Ellipse beschrieben sein, sondern es kommt erfindungsgemäß lediglich darauf an, dass die Bahngleichung eines Mittelpunkts einer frei auf der jeweiligen Bahn abrollenden Kugel durch eine elliptische Mittelpunktsgleichung beschrieben werden kann. Erfindungsgemäß umfasst soll sein, dass der eigentliche Bahnverlauf nicht durch dieselbe Gleichung beschrieben wird, sondern sich die ellipsenförmige Bewegung des Mittelpunkts lediglich durch den Verlauf des oder der Berührpunkte zwischen Bahn und Kugel beim Ablaufen der Kugel auf der Bahn ergibt. Der Verlauf des oder der Berührpunkte zwischen Bahn und Kugel beim Ablaufen der Kugel auf der Bahn in Axialrichtung ist gemäß einer bevorzugten Ausführungsform ebenfalls durch eine Ellipsengleichung beschreibbar. Die Kugel kann in Abhängigkeit von der Bahngeometrie jeweils einen Berührpunkt beziehungsweise genauer eine . Herzsche Berührfläche mit der Bahn ausbilden oder zwei dieser Punkte bzw. Flächen ausbilden. Bevorzugt weisen die Bahnen senkrecht zur jeweiligen Axialrichtung der Kugelnabe oder des Außenteils einen kugelförmigen, elliptischen oder gotischen Querschnittsverlauf auf. Um ein besonders hohes Drehmoment übertragen zu können, weisen die Bahnen besonders bevorzugt einen gotischen Querschnittsverlauf auf.

Bevorzugt sind der elliptische Bewegungsverlauf der Bahn des Außenteils und der elliptische Bewegungsverlauf der Bahn der Kugelnabe bei nicht angewinkeltem Gelenk, also im gestreckten Zustand, nicht deckungsgleich. Dies wird beispielsweise genutzt, um Spiel oder auch gelenkstellungsabhängig variierendes Spiel in die Gelenkverbindung einzubringen. Gemäß einer weiteren Ausgestaltung wird diese nicht deckungsgleiche Auslegung dazu genutzt, der Kugel jeweils eine gelenkstellungsabhängige Anordnung bezüglich des Gelenkmittelpunktes aufzuzwingen.

In einer einfachen Ausgestaltung sind die sich aus den jeweiligen Mittelpunktsgleichungen der Ellipsen ergebenden Mittelpunkte für die Bahnen der Kugelnabe zu denen der Bahnen des Außenteils wenigstens, bevorzugt nur, in Axialrichtung bei nicht angewinkeltem Gelenk versetzt.

Gemäß einer weiteren vorteilhaften Ausgestaltung ist die jeweilige Rotationsachse (Axialrichtung) der Kugelnabe und/oder des Außenteils parallel zur (großen) Hauptachse der der jeweiligen Mittelpunktsgleichung entsprechenden Ellipse oder schneidet diese unter einem spitzen Winkel. Dadurch wird erreicht, dass die Krümmung der Bahn, die dem Ellipsenbereich um die Nebenachse herum entspricht, gegenüber einem Kreis mit entsprechendem Radius vergleichsweise schwach ausfällt. Folglich vergrößert sich der Abstand der Kugel von dem Gelenkmittelpunkt mit dem Abwinkeln des Gelenks. Es können größere Drehmomente übertragen werden und die Lebensdauer des Gelenks erhöht werden. Zur Vereinfachung der Herstellung sind die Hauptachsen der den elliptischen Bewegungsverlauf beschreibenden Ellipsen der Bahnen des Außenteils zu den Hauptachsen der Bahnen der Kugelnabe bei nicht angewinkeltem Gelenk parallel.

Alternativ zu der zuletzt beschriebenen bevorzugten Ausführungsform ist die jeweilige Rotationsachse der Kugelnabe und/oder des Außenteils parallel zur (kleinen) Nebenachse der der jeweiligen Mittelpunktsgleichung entsprechenden Ellipse oder schneidet diese unter einem spitzen Winkel. Dadurch wird erreicht, dass die Krümmung der Bahn, die dem Ellipsenbereich um die (große) Hauptachse herum entspricht, gegenüber einem Kreis mit entsprechendem Radius vergleichsweise stark ausfällt. Folglich verkleinert sich der Abstand der Kugel von dem Gelenkmittelpunkt mit dem Abwinkeln des Gelenks. Es wird eine starkes Anschmiegen der jeweiligen Kugel an die Bahn erreicht, der Verschleiß wird verringert. Zur Vereinfachung der Herstellung sind die Hauptachsen der den elliptischen Bewegungsverlauf beschreibenden Ellipsen der Bahnen des Außenteils zu den Hauptachsen der Bahnen der Kugelnabe bei nicht angewinkeltem Gelenk parallel.

Gemäß einer weiteren Ausgestaltung weisen das Außenteil und die Kugelbahnen jeweils erste und zweite, in Umfangsrichtung alternierend angeordnete Bahnen auf, wobei deren durch die zugehörige Mittelpunktsgleichung beschriebenen Mittelpunkte wenigstens in Axialrichtung versetzt sind. Dabei wird ein Gegenbahngelenk realisiert, das geeignet ist, hohe Drehmomente zu übertragen und gleichzeitig in der Lage ist, hohe Axialkräfte aufzunehmen.

Weitere Merkmale und Vorteile der Erfindung ergeben sich aus den übrigen Ansprüchen sowie der folgenden Beschreibung von nicht einschränkend zu verstehenden Ausführungsbeispielen der Erfindung, die im Folgenden unter Bezugnahme auf die Zeichnungen näher erläutert werden. In diesen Zeichnungen zeigen schematisch:
Fig. 1 eine Draufsicht senkrecht zur Axialrichtung einer Ausführungsform des Gelenks in nicht angewinkeltem Zustand;
Fig. 2 eine Schnittansicht gemäß der Schnittlinie A aus Fig. 1 und entlang der Axialrichtung der Ausführungsform aus Fig. 1;
Fig. 3 eine Draufsicht senkrecht zur Axialrichtung der Ausführungsform aus Fig. 1 in angewinkeltem Zustand;
Fig. 4 eine Schnittansicht gemäß der Schnittlinie B aus Fig. 3 und entlang der Axialrichtung der Ausführungsform aus Fig. 3
Fig. 5 eine Draufsicht senkrecht zur Axialrichtung einer weiteren auch als Gegenbahngelenk bezeichneten Ausführungsform, des Gelenks in nicht angewinkeltem Zustand;
Fig. 6 eine Schnittansicht gemäß der Schnittlinie A aus Fig. 5 und entlang der Axialrichtung der Ausführungsform aus Fig. 5, wobei sich das Gelenk in nicht angewinkeltem Zustand befindet;
Fig. 7 eine Schnittansicht entlang der Axialrichtung einer weiteren, als Gegenbahngelenk bezeichneten Ausführungsform, wobei sich das Gelenk in nicht angewinkeltem Zustand befindet;
Fig. 8 eine Fig. 5 entsprechende Draufsicht, wobei sich das Gelenk in angewinkeltem Zustand befindet;
Fig. 9 eine Fig. 6 entsprechende Schnittansicht, wobei sich das Gelenk in angewinkeltem Zustand befindet;
Fig. 10 eine Fig. 7 entsprechende Schnittansicht, wobei sich das Gelenk in angewinkeltem Zustand befindet;
Fig. 11 zeigt einen Vergleich von elliptischen Bahnverläufen zu nicht erfindungsgemäßen kugelförmigen Bahnverläufen bei nicht angewinkeltem Gelenk;
Fig. 12 zeigt einen Vergleich von elliptischen Bahnverläufen zu nicht erfindungsgemäßen kugelförmigen Bahnverläufen bei angewinkeltem Gelenk;
Fig. 13 ist eine Detailansicht aus Fig. 12

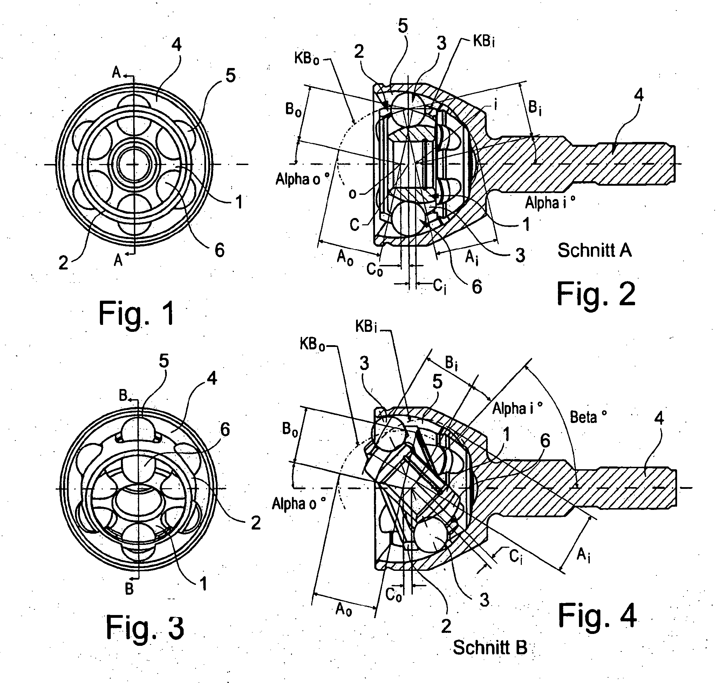

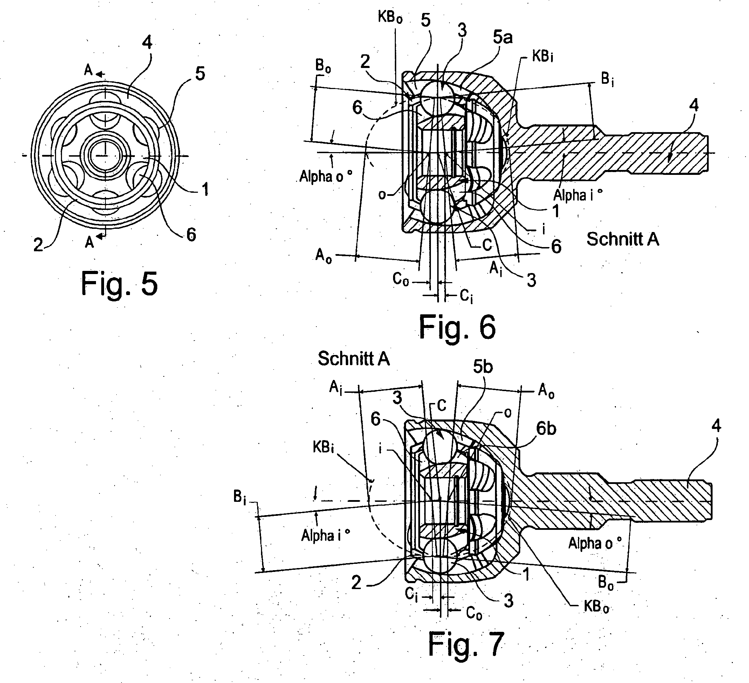

Wie die Figur 2 zeigt, umfasst das Gelenk ein Außenteil 4 und eine in diesem hohlen Außenteil 4 aufgenommene Kugelnabe 1. Die beiden stehen über 6, 8 oder 12 Kugeln 3 in einem Wirkeingriff, wobei die Kugeln 3 in einem Kugelkäfig 2 geführt sind. Bei dem Gelenk sind so in der Längsrichtung des Außenteils 4 und der Kugelnabe 1 Bahnen 5 bzw. 6 ausgeprägt, dass der Mittelpunkt einer auf der jeweiligen Bahn 5, 6 abrollenden Kugel jeweils eine Ellipse, KBo für das Außenteil, KBi für die Kugelnabe, beschreibt. Beispielsweise weist der in der Axialrichtung der Kugelnabe 1 bzw. des Außenteils 4 zumindest der den Bewegungsablauf der Kugel bestimmende Abschnitt der Bahn einen elliptischen Querschnitt in Axialrichtung auf. "Elliptisch" meint einen Abschnitt einer durch eine elliptische Mittelpunktsgleichung beschreibbare Ellipse. Die elliptischen Bahnen KBo bzw. KBi haben ihren Konstruktionsursprung um die Maße Ci und Co vom Gelenksmittelpunkt C entfernt und befindet sich somit auf den Punkten i und o, bevorzugt auf der Gelenkmittelachse bei nicht angewinkeltem Gelenk. Vom Punkt i aus wird eine Ellipse KBi konstruiert, die den Bahnverlauf der Kugelmitte an der Kugelnabe 1 entspricht. Von dieser Kugelmittellinie ist dann der Bahnquerschnitt senkrecht zu der Verlaufsrichtung beispielsweise gotisch, elliptisch oder kugelförmig ausgeprägt. Bevorzugt sind diese gotisch ausgebildet. Die Bahnellipsen KBi von der Kugelnabe 1 werden durch die Länge Ai und die Breite Bi definiert. Wie dargestellt sind die Bahnellipsen KBi der Kugelnabe 1, also deren Hauptachse, nicht erfindungsgemäß noch im Punkt i um den Winkel Alpha i° bezüglich der Axialrichtung der Kugelnabe 1 gedreht ausgebildet. Erfindungsgemäß sind die Ellipsen KBi jedoch nicht verdreht, d.h. deren Hauptachsen sind parallel zur Axialrichtung der Kugelnabe 1. Vom Punkt o aus wird erfindungsgemäß eine Ellipse KBo konstruiert, die den Bahnverlauf der Kugelmitte am Außenteil 4 entspricht. Von dieser Kugelmittellinie aus wird dann der Bahnquerschnitt konstruiert der z.B. gotisch, elliptisch oder kugelförmig ausgeprägt sein kann. Die Bahnellipsen von dem Außenteil (4) werden durch die Länge Ao und die Breite Bo definiert. Wie dargestellt sind die Bahnellipsen des Außenteils 4 noch im Punkt o nicht erfindungsgemäß um den Winkel Alpha o° bezüglich der Axialrichtung des Außenteils 4 gedreht. Erfindungsgemäß sind jedoch deren Hauptachsen parallel zur Axialrichtung des Außenteils 4. Figur 1 zeigt die Draufsicht des Kugelgleichlauffestgelenks in gestreckter Form (Abwinklung 0°). Der dazugehörige Schnitt ist in Figur 2 gezeigt. Die Konstruktionsmittelpunkte o der elliptischen Bahnen KBo befindet sich beim Außenteil 4 bei allen Bahnen auf der gleichen Seite. Die Konstruktionsmittelpunkte i der elliptischen Bahnen von der Kugelnabe befindet sich ebenfalls immer auf der gleiche Seite. Figur 3 zeigt die Draufsicht und Figur 4 den Schnitt von einem Kugelgleichlauffestgelenk mit elliptischen Bahnen wie in Figur 1 und 2, mit dem Unterschied, dass das Gelenk um den Winkel Beta° abgewinkelt ist. Figur 5 zeigt die Draufsicht von einem Kugelgegenbahngleichlauffestgelenk mit elliptischen Bahnen in gestreckter Form (Abwinklung 0°). Bei dieser Konstruktion wechselt sich die Position der Konstruktionsmittelpunkte o und i der Bahnellipse KBo bzw. KBi bei jedem Bahnpaar 5a, 6a bzw. 5b, 6b im Uhrzeigersinn ab. In Figur 6 ist der Konstruktionsmittelpunkt der Bahnellipse so angeordnet, dass o (Außenteil) links vom Gelenkmittelpunkt C ist und i (Kugelnabe) rechts vom Gelenkmittelpunkt C sich nun links vom Gelenkmittelpunkt C und der Konstruktionsmittelpunkt o (Außenteil) befindet sich nun rechts vom Gelenkmittelpunkt C.

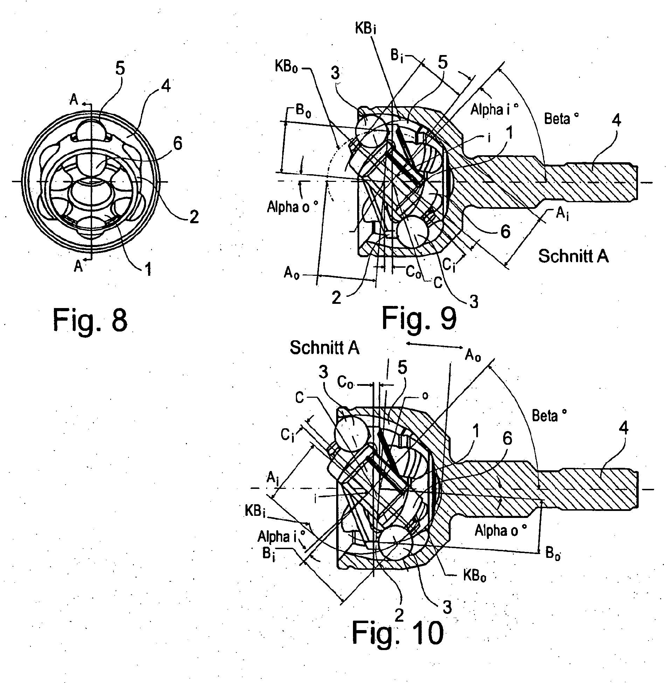

Figur 8, 9 und 10 zeigen das Kugelgegenbahngleichlaufgelenk wie in Figur 5, 6 und 7 gezeigt, im abgewinkelten (Beta °) Zustand. Die elliptischen Bahnen können beim Außenteil wie in Figur 1-10 gezeigt, mit einem angeformten Gelenkboden, oder ohne Gelenkboden (Scheibe) konstruiert werden. Die Anzahl der elliptischen Bahnpaare kann 6, 8 und 12 betragen.

Ellitpische Mittelpunktsgleichung für die Bahnform der Kugelnabe: (X-Xm)2/Ai2 + (Y-Ym)2/Bi2 = 1

Elliptische Mittelpunktsgleichung für die Bahnform des Außenteils: (X-Xm)2/ Ao2 + (Y-Ym)2/Bo2 = 1

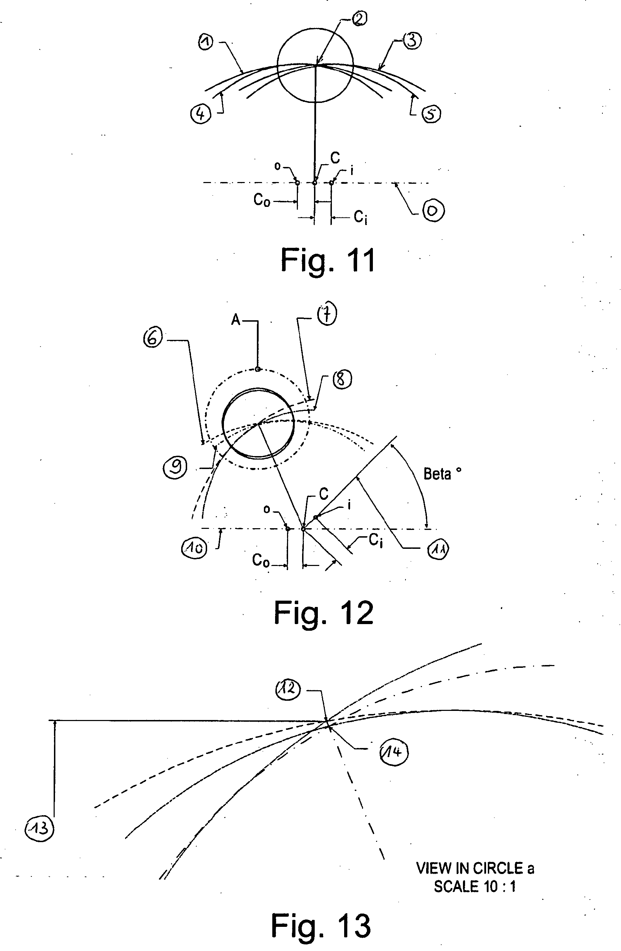

Durch das Verwenden von elliptischen Bahnen im Außenteil und in der Kugelnabe kann man die Position der Kugel in der Endlage der Bahn (unter Abwinklung) besser vorgeben. Man hat, im Gegensatz zur kreisförmigen Bahn, die Möglichkeit, die Kugeln näher an die Gelenkmittelachse oder weiter weg von der Gelenkmittelachse zu positionieren und kann dadurch die Lebensdauer und die zu . übertragende Kraft unter Abwinklung des Gelenkes verbessern. Figur 11 zeigt einen Vergleich von einem kreisbahnförmigen Bahnverlauf (Kreis) der Kugelmittellinie mit einem elliptischen Bahnverlauf der Kugelmittelline unter 0° Abwinklung. Die Kugelmitte von beiden Bahnen liegt bei diesem Beispiel auf dem gleichen Punkt. Wenn man das Gelenk (Figur 12 und Figur 13) aber abwinkelt, liegt die Kugel der elliptischen Bahnform nicht mehr auf den gleichen Punkt wie von der kreisförmigen Bahn. Im Beispiel Figur 12 und 13 liegt der Kugelmittelpunkt der elliptischen Bahnform weiter von der Gelenkmittelachse entfernt, als der Kugelmittelpunkt der kreisförmigen Bahn. Man kann die elliptische Bahnform auch so konstruieren, dass der Kugelmittelpunkt näher an der Gelenkmittelachse liegt, als der Kugelmittelpunkt der kreisförmigen Bahn. Ferner wird das Anschmiegen der Kugeln an die Bahnen insbesondere bei abgewinkeltem Gelenk verbessert.

### Bezugszeichenliste:

KBi = elliptischer Bahnverlauf des Kugelmittelpunkts einer auf der Bahn der Kugelnabe ablaufenden Kugel
KBo = elliptischer Bahnverlauf des Kugelmittelpunkts einer auf der Bahn des Außenteils ablaufenden Kugel
C = Gelenkmittelpunkt;
o = Konstruktionsmittelpunkt der elliptischen Bahn vom Außenteil
i = Konstruktionsmittelpunkt der elliptischen Bahn der Kugelnabe
Co, Co' = Abstand Gelenkmittelpunkt C zu Konstruktionsmittelpunkt o
Ci, Ci' = Abstand Gelenkmittelpunkt C zu Konstruktionsmittelpunkt i
Ao = Länge der Bahnellipse vom Außenteil
Bo = Breite der Bahnellipse vom Außenteil
Alpha o° = Drehwinkel der Bahnellipse im Punkt o vom Außenteil
Ai = Länge der Bahnellipse von der Kugelnabe
Bi = Breite der Bahnellipse von der Kugelnabe
Alpha i° = Drehwinkel der Bahnellipse im Punkt i von der Kugelnabe
Beta° = Winkel zwischen Achse bzw. Axialrichtung der Kugelnabe und Achse bzw. Axialrichtung des Außenteils (Abwinklung)
1 = Kugelnabe
2 = Kugelkäfig
3 = Kugel
4 = Außenteil
5, 5a, 5b = Bahn im Außenteil
6, 6a, 6b = Bahn in der Kugelnabe
Ellitpische Mittelpunktsgleichung für die Bahnform der Kugelnabe: (X-Xm)2/Ai2 + (Y-Ym)2/Bi2 = 1
Elliptische Mittelpunktsgleichung für die Bahnform des Außenteils: (X-Xm)2/ Ao2 + (Y-Ym)2/Bo2 = 1

Erläuterung Fig. 11-13 ;
0: Mittelachse von Kugelnabe auf Außenteil
1: Elliptischer Bahnverlauf der Kugelmitte vom Außenteil
2: Lage des Kugelmittelpunkts bei 0°
3: Elliptischer Bahnverlauf ! der Kugelmitte von der Kugelnabe
4: Kreisförmiger Bahnverlauf der Kugelmitte vom Außenteil
5: Kreisförmiger Bahnverlauf der Kugelmitte von der Kugelnabe 6: Elliptischer Bahnverlauf der Kugelmitte vom Außenteil
7: Elliptischer Bahnverlauf der Kugelmitte von der Kugelnabe
8: Kreisförmiger Bahnverlauf der Kugelmitte von der Kugelnabe
9: Kreisförmiger Bahnverlauf der Kugelmitte vom Außenteil
10: Mittelachse Außenteil
11: Mittelachse Kugelnabe
12: Lage des Kugelmittelpunkts von der elliptischenBahn
13: Lage des Kugelmittelpunkts liegt weiter weg von der Gelenkmittelachse
14: Lage des Kugelmittelpunkts von der Kreisförmlgen Bahn

## Patentansprüche

1. Kugelgleichlauffestgelenk, mit einem hohlen Außenteil (4), in dessen Innenfläche Bahnen (5) angeordnet sind, die sich in Axialrichtung des Außenteils (4) erstrecken, und eine in dem Außenteil (4) angeordnete Kugelnabe (1), in deren Außenfläche zu den Bahnen (5) des Außenteils (4) bezüglich deren Anordnung korrespondierende Bahnen (6) angeordnet sind, die sich in Axialrichtung der Kugelnabe (1) erstrecken, mehreren Kugeln (3), welche jeweils in einer Bahn (5) des Außenteils (4) und einer Bahn (6) der Kugelnabe (1) zur Drehmomentüberträgung aufgenommen sind, einem in dem Raum zwischen dem Außenteil (4) und der Kugelnabe (1) angeordneten Käfig (2) mit Kugelfenstern, um die Kugeln (3), beispielsweise in einer gemeinsamen Kugelebene, zu halten, wobei die Bahnen (5, 6) jeweils so ausgestaltet sind, dass sich ein elliptischer Bewegungsverlauf des Mittelpunkts einer jeweils auf der Bahn (5, 6) in Axialrichtung abrollenden Kugel (3) ergibt, der durch eine elliptische Mittelpunktsgleichung definiert ist, und wobei die Hauptachsen der den elliptischen Bewegungsverlauf beschreibenden Ellipsen der Bahnen (5) des Außenteils (4) zu den Hauptachsen der Bahnen (6) der Kugelnabe (1) bei nicht angewinkeltem Gelenk parallel sind.

2. Kugelgleichlauffestgelenk gemäß dem vorhergehenden Anspruch, wobei der elliptische Bewegungsverlauf der Bahn (5) des Außenteils (4) und der elliptische Bewegungsverlauf der Bahn (6) der Kugelnabe (1) bei nicht angewinkeltem Gelenk nicht deckungsgleich sind.

3. Kugelgleichlauffestgelenk gemäß einem der vorhergehenden Ansprüche, wobei die sich daraus ergebenden Mittelpunkte (Ci) für die Bahnen (6) der Kugelnäbe (1) zu denen (Co) der Bahnen (5) des Außenteils (4) wenigstens, bevorzugt nur, in Axialrichtung bei nicht angewinkeltem Gelenk versetzt sind.

4. Kugelgleichlauffestgelenk gemäß einem der vorhergehenden Ansprüche, wobei die jeweilige Axialrichtung der Kugelnabe (1) und/oder des Außenteils (4) parallel zur Hauptachse der der jeweiligen Mittelpunktsgleichung entsprechenden Ellipse ist oder diese unter einem spitzen Winkel schneidet.

5. Kugelgleichlauffestgelenk gemäß einem der vorhergehenden Ansprüche 1 bis 3, wobei die jeweilige Axialrichtung der Kugelnabe (1) und/oder des Außenteils (4) parallel zur Nebenachse der der jeweiligen Mittelpunktsgleichung entsprechenden Ellipse ist oder diese, unter einem spitzen Winkel schneidet.

6. Kugelgleichlauffestgelenk gemäß einem der vorhergehenden Ansprüche, wobei die Bahnen (5, 6) senkrecht zur jeweiligen Axialrichtung der Kugelnabe (1) oder des Außenteils (4) einen elliptischen, kugelförmigen oder gotischen Querschnittsverlauf, bevorzugt gotischen Querschnittsverlauf, aufweisen.

7. Kugelgleichlauffestgelenk gemäß einem der vorhergehenden Ansprüche, wobei das Außenteil (4) und die Kugelnabe (1) jeweils erste und zweite, in Umfangsrichtung alternierend angeordnete Bahnen (5a, 5b, 6a, 6b) aufweisen, wobei deren durch die zugehörige Mittelpunktsgleichung beschriebenen Mittelpunkte (Ci, Co) der ersten Bahnen (5a, 6a) wenigstens in Axialrichtung zu den Mittelpunkten (Ci', Co') der zweiten Bahnen (5b, 6b) versetzt sind.

## Claims

1. A constant velocity fixed ball joint, comprising a hollow outer part (4), in whose inner face tracks (5) are disposed that extend in the axial direction of the outer part (4), and a ball hub (1), which is disposed in the outer part (4) and in whose outer face tracks (6) are disposed, which correspond to the tracks (5) of the outer part (4) with regard to their arrangement and which extend in the axial direction of the ball hub (1), several balls (3), which are respectively accommodated in a track (5) of the outer part (4) and a track (6) of the ball hub (1) for transmitting torque, a cage (2) with ball windows, which is disposed in the space between the outer part (4) and the ball hub (1), in order to retain the balls (3), for example in a common ball plane, wherein the tracks (5, 6) are respectively configured so as to result in an elliptical trajectory of the centre of a ball (3) respectively rolling on the track (5, 6) in the axial direction which is defined by an elliptical equation of the centre, and wherein the major axes of the ellipses of the tracks (5) of the outer part (4) describing the elliptical trajectory are parallel to the major axes of the tracks (6) of the ball hub (1) when the joint is not bent.

2. The constant velocity fixed ball joint according to the preceding claim, wherein the elliptical trajectory of the track (5) of the outer part (4) and the elliptical trajectory of the track (6) of the ball hub (1) are not congruent when the joint is not bent.

3. The constant velocity fixed ball joint according to any one of the preceding claims, wherein the centres (Ci) for the tracks (6) of the ball hub (1) resulting therefrom, relative to those (Co) of the tracks (5) of the outer part (4), are offset at least, preferably only, in the axial direction, when the joint is not bent.

4. The constant velocity fixed ball joint according to any one of the preceding claims, wherein the respective axial direction of the ball hub (1) and/or of the outer part (4) is parallel to the major axis of the ellipsis corresponding to the respective equation of the centre or intersects it at an acute angle.

5. The constant velocity fixed ball joint according to any one of the preceding claims 1 to 3, wherein the respective axial direction of the ball hub (1) and/or of the outer part (4) is parallel to the minor axis of the ellipsis corresponding to the respective equation of the centre or intersects it at an acute angle.

6. The constant velocity fixed ball joint according to any one of the preceding claims, wherein the tracks (5, 6) have an elliptical, spherical or gothic cross-sectional profile, preferably a gothic cross-sectional profile, perpendicular to the respective axial direction of the ball hub (1) or of the outer part (4).

7. The constant velocity fixed ball joint according to any one of the preceding claims, wherein the outer part (4) and the ball hub (1) each have first and second tracks (5a, 5b, 6a, 6b) disposed alternately in the circumferential direction, wherein their centres (Ci, Co) of the first tracks (5a, 6a) described by the associated equation of the centre are offset, at least in the axial direction, to the centres (Ci', Co') of the second tracks (5b, 6b).

## Revendications

1. Joint homocinétique fixe à billes, comprenant une partie extérieure (4) creuse dans la surface intérieure de laquelle sont disposées des gorges (5) qui s'étendent dans la direction axiale de la partie extérieure (4), et un moyeu à billes (1) qui est disposé dans ladite partie extérieure (4) et dans la surface extérieure duquel sont disposées des gorges (6) qui correspondent aux gorges (5) de la partie extérieure (4) quant l'agencement de celles-ci et qui s'étendent dans la direction axiale du moyeu à billes (1), une pluralité de billes (3) qui sont reçues chacune dans une gorge (5) de la partie extérieure (4) et dans une gorge (6) du moyeu à billes (1) pour la transmission de couple, une cage (2) disposée dans l'espace situé entre la partie extérieure (4) et le moyeu à billes (1) et ayant des fenêtres à billes afin de maintenir les billes (3), par exemple dans un plan de billes commun, lesdites gorges (5, 6) étant configurées chacune de manière à ce qu'il en résulte une trajectoire elliptique de mouvement du centre d'une bille (3) roulant respectivement dans la gorge (5, 6) dans la direction axiale, qui est définie par une équation elliptique du centre, et les axes principaux des ellipses des gorges (5) de la partie extérieure (4), qui décrivent la trajectoire elliptique de mouvement, étant parallèles aux axes principaux des gorges (6) du moyeu à billes (1) lorsque le joint n'est pas plié.

2. Joint homocinétique fixe à billes selon la revendication précédente, dans lequel la trajectoire de mouvement elliptique de la gorge (5) de la partie extérieure (4) et la trajectoire de mouvement elliptique de la gorge (6) du moyeu à billes (1) ne coïncident pas lorsque le joint n'est pas plié.

3. Joint homocinétique fixe à billes selon l'une quelconque des revendications précédentes, dans lequel les centres (Ci) pour les gorges (6) du moyeu à billes (1), qui en résultent, par rapport à ceux (Co) des gorges (5) de la partie extérieure (4) sont décalés au moins, de préférence seulement, dans la direction axiale lorsque le joint n'est pas plié.

4. Joint homocinétique fixe à billes selon l'une quelconque des revendications précédentes, dans lequel la direction axiale respective du moyeu à billes (1) et/ou de la partie extérieure (4) est parallèle à l'axe principal de l'ellipse correspondant à l'équation du centre respective, ou coupe celui-ci à un angle aigu.

5. Joint homocinétique fixe à billes selon l'une quelconque des revendications précédentes 1 à 3, dans lequel la direction axiale respective du moyeu à billes (1) et/ou de la partie extérieure (4) est parallèle à l'axe secondaire de l'ellipse correspondant à l'équation du centre respective, ou coupe celui-ci à un angle aigu.

6. Joint homocinétique fixe à billes selon l'une quelconque des revendications précédentes, dans lequel les gorges (5, 6) présentent, perpendiculairement à la direction axiale respective du moyeu à billes (1) ou de la partie extérieure (4), un tracé elliptique, sphérique ou gothique de la section transversale, de préférence un tracé gothique de la section transversale.

7. Joint homocinétique fixe à billes selon l'une quelconque des revendications précédentes, dans lequel la partie extérieure (4) et le moyeu à billes (1) présentent chacun des premières et deuxièmes gorges (5a, 5b, 6a, 6b) disposées de manière alternante dans la direction circonférentielle, leurs centres (Ci, Co) des premières gorges (5a, 6a), décrits par l'équation associée du centre, étant décalés au moins dans la direction axiale par rapport aux centres (Ci', Co') des deuxièmes gorges (5b, 6b).
